(19) Europäisches Patentamt
European Patent Office
Office européen des brevets

(11) **EP 1 335 810 B1**

(12) **FASCICULE DE BREVET EUROPEEN**

(45) Date de publication et mention
de la délivrance du brevet:
**17.12.2008 Bulletin 2008/51**

(21) Numéro de dépôt: **01993388.6**

(22) Date de dépôt: **08.11.2001**

(51) Int Cl.:
**B23K 26/12** $^{(2006.01)}$

(86) Numéro de dépôt international:
**PCT/FR2001/003469**

(87) Numéro de publication internationale:
**WO 2002/038325 (16.05.2002 Gazette 2002/20)**

(54) **PROCEDE DE COUPAGE LASER A HAUTE VITESSE AVEC GAZ ADAPTE**

HOCHGESCHWINDIGKEITS-LASERSCHNEIDVERFAHREN MIT GEEIGNETEM GAS

HIGH-SPEED LASER CUTTING METHOD WITH ADAPTED GAS

(84) Etats contractants désignés:
**AT BE CH CY DE DK ES FI FR GB GR IE IT LI LU
MC NL PT SE TR**

(30) Priorité: **09.11.2000 FR 0014407**

(43) Date de publication de la demande:
**20.08.2003 Bulletin 2003/34**

(73) Titulaire: **L'AIR LIQUIDE, Société Anonyme pour
l'Etude
et l'Exploitation des Procédés Georges Claude
75007 Paris (FR)**

(72) Inventeur: **MATILE, Olivier
F-75018 Paris (FR)**

(74) Mandataire: **Pittis, Olivier
L'Air Liquide S.A.
75, quai d'Orsay
75321 Paris Cedex 07 (FR)**

(56) Documents cités:
**DE-A- 4 123 716        US-A- 5 578 228
US-A- 6 060 687**

• **PREISSIG K-U ET AL: "HIGH SPEED LASER
CUTTING OF THIN METAL SHEETS"
PROCEEDINGS OF THE SPIE, SPIE,
BELLINGHAM, VA, US, vol. 2207, 1996, pages
96-110, XP000992482 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un procédé de coupage par faisceau laser à haute vitesse utilisant une lentille pour focaliser le faisceau laser et un gaz d'assistance du faisceau laser.

En découpe laser, pour des vitesses faibles de découpe, c'est-à-dire typiquement inférieures à 15 m/min, il est connu que le profil de découpe est simple et l'évacuation du métal fondu se fait dans l'axe du faisceau.

Cependant, pour des découpes réalisées à vitesse plus élevée, c'est-à-dire au-delà de 15 m/min, il a été mis en évidence des apparitions de plasma gazeux au niveau de la saignée de coupe en cours de formation, limitant les performances de découpe sur des tôles de fines épaisseurs, c'est-à-dire inférieures à 2 m/min.

Ces deux types de phénomènes sont notamment décrits dans les documents US-A-5,578,228, DE-A-41123716 ou High Speed Laser Cutting of Thin Metal Sheets, K.U. Preissig et, Fraunhöfer Institut für Lasertechnik, SPIE Vol. 2207, 1996.

La formation de ce plasma s'explique par les mouvements induits dans le profil de découpe. En effet, les mouvements hydrodynamiques qui sont générés pendant la coupe provoquent une évacuation du métal fondu sur l'arrière du profil de découpe.

Dès lors, le profil dé découpe peut être considéré comme étant formé de deux parties, à savoir une partie non débouchante qui s'apparente à un capillaire de vapeur comme dans le cas des procédés de coupe à forte densité d'énergie, et une partie débouchante par laquelle s'effectue l'évacuation du métal fondu.

On peut donc faire l'analogie entre le capillaire formé en soudage à forte densité d'énergie, par exemple en soudage plasma en mode keyhole (soudure débouchante) et le capillaire formé en soudage laser à haute vitesse.

En effet, du fait des puissances spécifiques élevées, la réalisation de la soudure par faisceau laser repose sur des phénomènes de fusion localisée de la matière au point d'impact du faisceau où il se forme un capillaire dit "keyhole" rempli de vapeurs métalliques ionisées à haute température. Les parois de ce capillaire sont formées de métal en fusion.

Ce capillaire a un rôle important car il permet de transférer l'énergie directement au coeur du matériau.

Le bain de fusion ainsi formé et entretenu, et est déplacé entre les pièces à assembler.

Le métal se solidifie après le passage du faisceau assurant ainsi l'assemblage des pièces.

Dit autrement, l'apparition du capillaire s'accompagne de la formation d'un plasma de vapeurs métalliques, c'est-à-dire d'un milieu gazeux ionisé, électriquement neutre et à températures élevées.

Ce plasma de vapeurs métalliques résulte d'un couplage efficace entre le faisceau laser et la pièce.

Ce type de plasma absorbe une faible quantité de l'énergie incidente et n'engendre pas de modification notable de la largeur et de la profondeur du cordon de soudure.

Dans certaines conditions, notamment de puissance, de vitesse, d'épaisseur, de nature du gaz et de configuration, le plasma de vapeurs métalliques transfert une partie de son énergie au gaz de protection et il y a risque de formation d'un plasma du gaz de protection qui peut, dans certains cas, absorber l'énergie du faisceau laser, ce qui engendre un cordon de soudure plus large en surface et beaucoup moins pénétré dans le matériau.

Le problème qui se pose alors est alors d'éviter la formation d'un plasma du gaz de protection.

Pour ce faire, il a déjà été proposé d'utiliser de l'hélium qui est réputé être le gaz le plus approprié pour limiter l'apparition de ce type de plasma.

Cependant, ce gaz présente l'inconvénient par rapport à d'autres gaz d'avoir une masse volumique relativement faible, ce qui limite l'effet cinétique et conduit à utiliser des pressions de découpe relativement fortes.

En outre, le document JP-A-11314191 décrit un procédé de coupage laser de pièces en titane, en aluminium ou en acier inoxydable utilisant des mélanges gazeux d'argon et d'hydrogène ou d'hélium de sorte de pouvoir travailler à des puissances laser élevées, typiquement de 3kW ou plus, sans engendrer de défauts de qualité de coupe.

Dès lors, le but de la présente invention est d'améliorer les procédé de coupage par faisceau laser connus en proposant un procédé de coupage laser, dans lequel l'utilisation un mélange gazeux judicieux permet de limiter la formation dudit plasma indésirable et d'améliorer ainsi l'énergie cinétique du flux gazeux de manière à permettre un coupage par faisceau laser à des vitesses élevées, typiquement supérieures à 15 m/min, des pièces d'épaisseur comprise entre 0,1 et 2 mm.

La présente invention concerne alors un procédé de coupage d'une pièce en métal ou en alliage métallique ayant une épaisseur comprise entre 0,1 et 2 mm, à une vitesse de coupe supérieure à 15 m/min, par mise en oeuvre d'au moins un faisceau laser et d'au moins un gaz d'assistance dudit faisceau laser, caractérisé en ce que le gaz d'assistance est formé d'un mélange d'hélium et d'argon et/ou d'azote ou d'azote et d'oxygène.

Selon le cas, le procédé de l'invention peut comprendre l'une ou plusieurs des caractéristiques suivantes :

- la vitesse de coupe est supérieure à 18 m/min, de préférence supérieure à 20 m/min, préférentiellement supérieures à 25 m/min.
- la vitesse de coupe est inférieure à 300 m/min.
- le gaz d'assistance est formé d'un mélange d'hélium et d'argon, d'hélium et d'azote ou d'azote et d'oxygène.

- le gaz d'assistance est constitué d'un mélange d'hélium et d'argon contenant de 20 % à 80 % (en vol.) d'hélium et le reste étant de l'argon, de préférence 25 à 75 % d'hélium.
- le gaz d'assistance est formé d'un mélange d'hélium et d'azote contenant de 20 % à 80 % (en vol.) d'hélium et le reste étant de l'azote, de préférence 25 à 75 % d'hélium.
- le gaz d'assistance est formé d'un mélange d'azote et d'oxygène contenant de 0,5 % à 40 % (en vol.) d'oxygène et le reste étant de l'azote, de préférence 1 à 20 % d'oxygène.
- la pièce à couper est choisie parmi les plaques, les tôles et les tubes.
- le faisceau laser est délivré par un dispositif laser de type $CO_2$ ou de type Nd:YAG.
- on utilise une buse de diamètre interne compris entre 0,5 mm et 10 mm, de préférence entre 1 mm et 3 mm.
- le moyen optique permettant de focaliser le faisceau laser est choisi parmi les lentilles, les miroirs et leurs combinaisons, de préférence une lentille.
- on utilise une source laser comprise entre 500 et 6000 Watt de puissance.
- la pièce à couper est choisie parmi les plaques, les tôles et les tubes.

La présente invention va maintenant être mieux comprise grâce aux explications suivantes, données à titre illustratif mais non limitatif.

Dans le cadre de l'invention, il a été mis en évidence que, pour remédier ou minimiser la formation indésirable d'un plasma du gaz de protection, il faut utiliser un gaz à fort potentiel d'ionisation (en eV), c'est-à-dire contenant préférentiellement de l'hélium. Les potentiels d'ionisation des différents gaz sont donnés dans le tableau 1 ci-après.

Tableau I : Potentiels d'ionisation des gaz

| Gaz | Potentiels d'ionisation (en eV) |
|---|---|
| Hélium | 24,46 |
| Argon | 15,68 |
| Azote | 15,51 |
| Hydrogène | 15,43 |
| Oxygène | 12,50 |

Toutefois, en s'arrêtant à ce critère, l'hélium serait effectivement le meilleur des gaz à utiliser.

Or, comme susmentionné, cela ne suffit pas car l'hélium présente l'inconvénient d'avoir une masse volumique relativement faible, ce qui limite l'effet cinétique et conduit à utiliser des pressions de découpe relativement fortes.

Dès lors, l'inventeur de la présente invention a mis en évidence que l'autre paramètre à prendre en compte pour la découpe laser à haute vitesse est la masse volumique du gaz car, pour de fines épaisseurs (typiquement de 0,1 mm à 2 mm), l'aspect expulsion de métal est prépondérant par rapport à l'aspect exothermique car, du fait des vitesses de coupage relativement élevées, le temps de réaction est limité.

En effet, tout d'abord, si l'on considère l'énergie cinétique (Ec) du flux gazeux utilisé lors de la découpe laser, celle-ci est donnée par la formule (1) suivante :

$$Ec = \tfrac{1}{2} \cdot \rho \cdot V^2 \qquad (1)$$

où : $\rho$ est la masse volumique du gaz ($kg/m^3$) et $V^2$ est le carré de la vitesse dudit gaz (en m/s).

Or, la vitesse est fonction du débit (q) et du diamètre de la buse (D) utilisée pour expulser le gaz de coupe, soit :

$$V = q / ( \pi \cdot (D^2 / 4 )) \qquad (2)$$

Il en découle alors l'équation (3) suivante :

$$Ec = f ( \rho , q^2, 1/D^4 )  \qquad\qquad (3)$$

En d'autres termes, l'énergie cinétique du gaz dépend du débit donc la pression de gaz, du diamètre de la buse et de la masse volumique du gaz.

Pour augmenter les vitesses de coupe, il faut donc une masse volumique importante.

Les masses volumiques, à 15°C et 1,013 bar, des différents gaz du tableau I sont données dans le tableau II ci-après.

Tableau II : Masses volumiques des gaz

| Gaz | Masses volumiques des gaz (en kg/m$^3$) |
|---|---|
| Hélium | 0,169 |
| Argon | 1,69 |
| Azote | 1,17 |
| Hydrogène | 0,085 |
| Oxygène | 1,35 |

Il ressort donc des tableaux I et II que les mélanges particulièrement adaptés au coupage par faisceau laser à haute vitesse (> 15 m/min) sont les mélanges d'hélium et d'argon et/ou d'azote qui allient le potentiel d'ionisation élevé de l'hélium aux masses volumiques des gaz importantes de l'argon et/ou l'azote.

De façon moins préférentielle, des mélanges d'azote et d'oxygène pourraient aussi convenir.

**Revendications**

1.  Procédé de coupage d'une pièce en métal ou en alliage métallique ayant une épaisseur comprise entre 0,1 et 2 mm, à une vitesse de coupe supérieure à 15 m/min, par mise en oeuvre d'au moins un faisceau laser et d'au moins un gaz d'assistance dudit faisceau laser, **caractérisé en ce que** le gaz d'assistance est formé d'un mélange d'hélium et d'argon et/ou d'azote ou d'azote et d'oxygène.

2.  Procédé selon la revendication 1, **caractérisé en ce que** la vitesse de coupe est supérieure à 18 m/min, de préférence supérieure à 20 m/min.

3.  Procédé selon l'une des revendications 1 ou 2, **caractérisé en ce que** la vitesse de coupe est inférieure à 300 m/min.

4.  Procédé selon l'une des revendications 1 à 3, **caractérisé en ce que** le gaz d'assistance est formé d'un mélange d'hélium et d'argon, d'hélium et d'azote ou d'azote et d'oxygène.

5.  Procédé selon l'une des revendications 1 à 4, **caractérisé en ce que** le gaz d'assistance est constitué d'un mélange d'hélium et d'argon contenant de 20 % à 80 % (en vol.) d'hélium et le reste étant de l'argon, de préférence 25 à 75 % d'hélium.

6.  Procédé selon l'une des revendications 1 à 4, **caractérisé en ce que** le gaz d'assistance est formé d'un mélange d'hélium et d'azote contenant de 20 % à 80 % (en vol.) d'hélium et le reste étant de l'azote, de préférence 25 à 75 % d'hélium.

7.  Procédé selon l'une des revendications 1 à 4, **caractérisé en ce que** le gaz d'assistance est formé d'un mélange d'azote et d'oxygène contenant de 0,5 % à 40 % (en vol.) d'oxygène et le reste étant de l'azote, de préférence 1 à 20 % d'oxygène.

8.  Procédé selon l'une des revendications 1 à 7, **caractérisé en ce que** la pièce à couper est choisie parmi les plaques, les tôles et les tubes.

9. Procédé selon l'une des revendications 1 à 8, **caractérisé en ce que** le faisceau laser est délivré par un dispositif laser de type $CO_2$ ou de type Nd:YAG.

10. Procédé selon l'une des revendications 1 à 9, **caractérisé en ce qu'on** utilise une buse de diamètre interne compris entre 0,5 mm et 10 mm, de préférence entre 1 mm et 3 mm.

**Claims**

1. Method of cutting a workpiece made of metal or a metal alloy, having a thickness of between 0.1 and 2 mm, at a cutting speed of greater than 15 m/min, by using at least one laser beam and at least one assist gas for said laser beam, **characterized in that** the assist gas is formed from a helium/argon and/or helium/nitrogen or nitrogen/oxygen mixture.

2. Method according to Claim 1, **characterized in that** the cutting speed is greater than 18 m/min, preferably greater than 20 m/min.

3. Method according to either of Claims 1 and 2, **characterized in that** the cutting speed is less than 300 m/min.

4. Method according to one of Claims 1 to 3, **characterized in that** the assist gas is formed from a helium/argon, helium/nitrogen or nitrogen/oxygen mixture.

5. Method according to one of Claims 1 to 4, **characterized in that** the assist gas consists of a helium/argon mixture containing (by volume) 20% to 80% helium, preferably 25 to 75% helium, the remainder being argon.

6. Method according to one of Claims 1 to 4, **characterized in that** the assist gas is formed from a helium/nitrogen mixture containing (by volume) 20% to 80% helium, preferably 25 to 75% helium, the remainder being nitrogen.

7. Method according to one of Claims 1 to 4, **characterized in that** the assist gas is formed from a nitrogen/oxygen mixture containing (by volume) 0.5% to 40% oxygen, preferably 1 to 20% oxygen, the remainder being nitrogen.

8. Method according to one of Claims 1 to 7, **characterized in that** the workpiece to be cut is chosen from plates, sheets and tubes.

9. Method according to one of Claims 1 to 8, **characterized in that** the laser beam is delivered by a laser device of the $CO_2$ type or of the Nd:YAG type.

10. Method according to one of Claims 1 to 9, **characterized in that** a nozzle having an internal diameter between 0.5 mm and 10 mm, preferably between 1 mm and 3 mm, is used.

**Patentansprüche**

1. Verfahren zum Schneiden eines Werkstücks aus Metall oder aus einer Metalllegierung, das eine Dicke im Bereich zwischen 0,1 und 2 mm aufweist, mit einer Schnittgeschwindigkeit größer als 15 m/min, durch Einsatz mindestens eines Laserstrahls und mindestens eines Arbeitsgases des Laserstrahls, **dadurch gekennzeichnet, dass** das Arbeitsgas aus einem Gemisch aus Helium und Argon und/oder Stickstoff oder Stickstoff und Sauerstoff gebildet ist.

2. Verfahren nach Anspruch 1, **dadurch gekennzeichnet, dass** die Schnittgeschwindigkeit größer als 18 m/min, bevorzugt größer als 20 m/min ist.

3. Verfahren nach einem der Ansprüche 1 oder 2, **dadurch gekennzeichnet, dass** die Schnittgeschwindigkeit kleiner als 300 m/min ist.

4. Verfahren nach einem der Ansprüche 1 bis 3, **dadurch gekennzeichnet, dass** das Arbeitsgas aus einem Gemisch aus Helium und Argon, aus Helium und Stickstoff oder Stickstoff und Sauerstoff gebildet ist.

5. Verfahren nach einem der Ansprüche 1 bis 4, **dadurch gekennzeichnet, dass** das Arbeitsgas aus einem Gemisch aus Helium und Argon besteht, das (in Volumenprozent) 20 % bis 80 % Helium, bevorzugt 25 bis 75 % Helium enthält, und wobei der Rest Argon ist.

6. Verfahren nach einem der Ansprüche 1 bis 4, **dadurch gekennzeichnet, dass** das Arbeitsgas aus einem Gemisch aus Helium und Stickstoff gebildet wird, das (in Volumenprozent) 20 % bis 80 % Helium, bevorzugt 25 bis 75 % Helium enthält, und wobei der Rest Stickstoff ist.

7. Verfahren nach einem der Ansprüche 1 bis 4, **dadurch gekennzeichnet, dass** das Arbeitsgas aus einem Gemisch aus Stickstoff und Sauerstoff gebildet wird, das (in Volumenprozent) 0,5 % bis 40 % Sauerstoff, bevorzugt 1 bis 20 % Sauerstoff enthält, und wobei der Rest Stickstoff ist.

8. Verfahren nach einem der Ansprüche 1 bis 7, **dadurch gekennzeichnet, dass** das zu schneidende Werkstück ausgewählt ist aus Platten, Blechen und Rohren.

9. Verfahren nach einem der Ansprüche 1 bis 8, **dadurch gekennzeichnet, dass** der Laserstrahl von einer Laservorrichtung vom Typ $CO_2$ oder vom Typ Nd:YAG abgegeben wird.

10. Verfahren nach einem der Ansprüche 1 bis 9, **dadurch gekennzeichnet, dass** eine Düse mit einem Innendurchmesser im Bereich zwischen 0,5 mm und 10 mm, bevorzugt zwischen 1 mm und 3 mm verwendet wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5578228 A
- DE 41123716 A

- JP 11314191 A

**Littérature non-brevet citée dans la description**

- **K.U. PREISSIG.** High Speed Laser Cutting of Thin Metal Sheets. *SPIE,* 1996, vol. 2207